# EUROPEAN PATENT APPLICATION

(11) **EP 4 223 525 A1**
(43) Date of publication of application: **09.08.2023**
(21) Application number: 23154481.8
(22) Date of filing: 01.02.2023
(51) Int. Cl.: B32B 38/04, B29C 45/14, B31B 50/81, B65D 5/06

(54) **A PACKAGING MATERIAL, AND A METHOD FOR PRODUCING SUCH PACKAGING MATERIAL**

(30) Priority: 04.02.2022 EP 22155246
(71) Applicant: Tetra Laval Holdings & Finance S.A., 1009 Pully (CH)
(72) Inventor: PALLADINO, Daniele, 41123 Modena (IT); MORCIANO, Davide, 41123 Modena (IT); STAGLIANO, Armando, 41123 Modena (IT); TAVERNARI, Fabrizio, 41123 Modena (IT); CARRETTI, Enrico, 41123 Modena (IT); FIORITO, Francesca, 41123 Modena (IT); POPPI, Marco, 41123 Modena (IT)
(74) Representative: Tetra Pak - Patent Attorneys SE

(57) **Abstract**

A laminated packaging material (10) is provided. The laminated packaging material (10) comprises a bulk layer (12) of paper or paperboard or other cellulose-based material, one or more outside layers (14) being laminated to the bulk layer (12), one or more inside layers (16, 18, 19) being laminated to the bulk layer (12), and a plurality of longitudinally distributed primary holes (30) extending through the entire thickness of the laminated packaging material (10).

## Description

### Technical Field

The invention relates to a laminated packaging material for producing individual packaging containers for liquid food products. The present invention also relates to a method for producing such laminated packaging material.

### Background Art

Packaging containers of the single use disposable type for liquid foods are often produced from a packaging laminate based on paperboard or carton, and there is today a vast amount of different types of such packaging containers on the market. One commonly occurring packaging container is marketed under the trademark Tetra Brik Aseptic^{®} and is principally employed for aseptic packaging of liquid foods such as milk, fruit juices etc., sold for long term ambient storage. The packaging material in this known packaging container is typically a laminate comprising a bulk or core layer, of paper, paperboard or other cellulose-based material, and outer, liquid-tight layers of thermoplastics. In order to render the packaging container gas-tight, in particular oxygen gas-tight, for example for the purpose of aseptic packaging and packaging of milk or fruit juice, the laminate in these packaging containers normally comprises at least one additional barrier layer, most commonly an aluminum foil.

On the inside of the laminate, i.e. the side intended to face the filled food contents of a container produced from the laminate, there is an innermost layer, applied onto the aluminum foil, which innermost, inside layer may be composed of one or several part layers, comprising heat sealable thermoplastic polymers, such as adhesive polymers and/or polyolefins. Also on the outside of the bulk layer, there is an outermost heat sealable polymer layer.

The packaging containers are generally produced by means of modern, highspeed packaging machines of the type that form, fill and seal packages from a web or from prefabricated blanks of packaging material. Packaging containers may thus be produced by reforming a web of the laminated packaging material into a tube by both of the longitudinal edges of the web being united to each other in an overlap joint by welding together the inner- and outermost heat sealable thermoplastic polymer layers. The tube is filled with the intended liquid food product and is thereafter divided into individual packages by repeated transversal seals of the tube at a predetermined distance from each other below the level of the contents in the tube. The packages are separated from the tube by incisions along the transversal seals and are given the desired geometric configuration, normally parallelepiped, by fold formation along prepared crease lines in the packaging material.

The main advantage of this continuous tube-forming, filling and sealing packaging method concept is that the web may be sterilized continuously just before tube-forming, thus providing for the possibility of an aseptic packaging method, i.e. a method wherein the liquid content to be filled as well as the packaging material itself are reduced from bacteria and the filled packaging container is produced under clean conditions such that the filled package may be stored for a long time even at ambient temperature, without the risk of growth of micro-organisms in the filled product. Another important advantage of the Tetra Brik^{®} -type packaging method is, as stated above, the possibility of continuous highspeed packaging, which has considerable impact on cost efficiency.

Packaging containers for sensitive liquid food, for example milk or juice, can also be produced from sheet-like blanks or prefabricated blanks of the laminated packaging material of the invention. From a tubular blank of the packaging laminate that is folded flat, packages are produced by first of all building the blank up to form an open tubular container capsule, of which one open end is closed off by means of folding and heat-sealing of integral end panels. The thus closed container capsule is filled with the food product in question, e.g. juice, through its open end, which is thereafter closed off by means of further folding and heat-sealing of corresponding integral end panels. An example of a packaging container produced from sheet-like and tubular blanks is the conventional so-called gable-top package. There are also packages of this type which have a molded top made of plastic.

For improving the packaging containers techniques have been developed to provide the packaging containers with opening devices. This does not only make it easier for the consumer to maneuver the packaging container and reduce the risk for spilling while pouring the liquid food product, but if the opening device is properly manufactured and attached to the packaging container the integrity of the entire packaging container will also be increased. The opening devices may be a re-sealable or not re-sealable, possibly re-sealable like a screw cap.

Existing packaging containers with opening devices are produced by attaching a pre-manufactured opening device to the laminated packaging material. The laminated packaging material is provided with a pre-manufactured hole at the area where the opening device is to be attached. The pre-manufactured hole is covered by a membrane; the hole is provided by punching a hole in the bulk or core layer prior to lamination, and then covering the hole on the inside and outside by the additional lamination layers, including the barrier material, which layers will form the membrane. Such laminated packaging material is described in WO2012/072309. The packaging material is thus intact also at the area of the opening device, and when a user is opening the packaging container by maneuvering the opening device for the first time the membrane is penetrated thereby allowing access to the content inside the packaging container.

One other alternative may have injection molded opening devices. These opening devices may be formed on the pre-manufactured hole covered by the membrane as explained before by injecting polymer material on one side or possibly both sides of the packaging material and molding the polymer into a shape of an opening device. They may have a tearing section that is teared by the consumer just before the consumption. Another alternative of the injection molded opening device may have a cap tethered to a spout of the opening device.

For consumer satisfaction the penetration force or tearing force should be as low as possible, however in order to prevent unintentional penetration or tear some resistance of the opening structure is required. Careful design is therefore needed to meet these requirements.

Based on the above there is a need for improvements of a laminated packaging material which allows for the use of opening devices in a manner where the required integrity of the packaging container can be ensured while at the same time the required opening force or tearing force is within well-defined and acceptable levels.

Another example of how to provide the packaging material with opening devices is described in US2015274330A1. Here, a continuous and entirely intact packaging material is produced and fed to a packaging forming and filling machine. During operation, a punching machine of the packaging forming and filling machine will form pouring holes. These pouring holes are then covered by an injection molded spout portion before the packaging material is formed and filled with the desired content. Not only does this solution add significant complexity to the packaging forming and filling machine, but it also requires great accuracy in terms of spout positioning especially in the lateral or cross-wise direction, considering the speed and travelling path of the packaging material in the packaging forming and filling machine.

### Summary

It is an object of the invention to at least partly overcome one or more of the above-identified limitations of the prior art. In particular, it is an object to provide a ready-to-use laminated packaging material that allows for opening devices which are injection molded directly onto the laminated packaging material.

The term "ready-to-use" should be interpreted to mean a packaging material that is ready to be fed to a packaging forming and filling machine without requiring any substantial modifications to it.

According to a first aspect, a method for producing a laminated packaging material is provided. The method comprises i) providing a bulk layer of paper or paperboard or other cellulose-based material; ii) laminating one or more outside layers to the bulk layer, said outside layers intended to face the exterior of a packaging container formed by the packaging material, iii) laminating one or more inside layers to the bulk layer, said inside layers intended to face the interior of a packaging container form by the packaging material, iv) determining desired positions of a plurality of longitudinally distributed holes, and v) providing a plurality of longitudinally distributed holes at the desired positions, each hole extending through the entire thickness of the laminated packaging material. The laminated packaging material is preferably stored or transported, and is ready-to-use by feeding the packaging material to a packaging forming and filling machine. By such method the laminated packaging material will be ready for adding opening devices. This addition of the opening device may be achieved by injection molding; and the injection process may be facilitated compared to molding on a laminated packaging material that may harden or avoid flow of polymer between both sides of the packaging material. The required opening force and/or tearing force to open the opening device will also be entirely determined by the design of the opening device independently on the configuration and strength of the layers of the packaging material.

The method may further comprise a step of providing the laminated packaging material with opening devices, preferably re-sealable, each opening device covering one hole. Each opening device may be provided by injection molding directly onto the laminated packaging material. By integrating the injection molding in the filling machine a very high throughput can be achieved, still not requiring modifications to the apparatuses used for manufacturing the laminated packaging material.

The method may further comprise providing a plurality of crease lines and/or reference marks to the bulk layer prior to laminating one or more inside layers and/or outside layers to the bulk layer, and the desired positions of the plurality of longitudinally distributed holes may be determined based on the positions of the crease lines and/or the positions of reference marks provided. This will ensure correct positioning of the opening devices on the final packaging container, as its shape will be determined by the position of the crease lines. Providing the longitudinally distributed holes during the converting process, and preferably with reference to the crease lines and/or reference marks provides a great advantage since undesired motion of the packaging material in the packaging forming and filling machine will not affect the positioning of the longitudinally distributed holes.

The step of determining the desired position of the plurality of longitudinally distributed holes may further comprise determining shrinkage of the bulk layer during lamination of the one or more inside layers and/or outside layers, and correcting the desired positions based on the determined shrinkage. This will further improve the position accuracy of the opening devices, and also a correct alignment between the opening devices and the holes.

The method may further comprise providing a plurality of crease lines and/or reference marks to the laminated packaging material after laminating one or more inside layers and/or outside layers to the bulk layer, and wherein the desired positions of the plurality of longitudinally distributed holes are determined based on the positions of the crease lines and/or the positions of reference marks provided. This will make it easier to achieve a correct positioning of the holes with regards to the crease lines, as there will be no position deviation of the crease lines due to shrinkage.

The plurality of longitudinally distributed holes may be provided by punching, which allows for a simple and robust manufacturing process that can be fitted to existing converting apparatuses. Providing holes, probably by punching, and providing crease lines after laminating one or more inside layers and/or outside layers to the bulk layer may be provided at the same time, probably by the same processing unit and/or the same tool like a creasing roller also having punching tools thereon. Thus, the positioning of the hole may be provided accurately based on the positions of the crease lines. Providing the plurality of longitudinally distributed holes by the converting apparatuses provides significantly improved positioning control.

The holes may be distributed both longitudinally and transversally across the laminated packaging material, and the method may further comprise cutting the laminated packaging material in the longitudinal direction to form separate webs of laminated packaging material, each separate web of laminated packaging material comprising holes only distributed longitudinally. The holes can thus be provided on a multi-lane web of packaging material which makes the manufacturing process more efficient.

According to a second aspect a ready-to-use laminated packaging material is provided, comprising a bulk layer of paper or paperboard or other cellulose-based material. The laminated packaging material further comprises one or more outside layers being laminated to the bulk layer, one or more inside layers being laminated to the bulk layer, and a plurality of longitudinally distributed primary holes extending through the entire thickness of the laminated packaging material. The diameter of each primary hole may be, and preferably is substantially constant. The laminated packaging material is thus ready to be fed to a packaging forming and filling machine, which requires no additional equipment to prepare the holes for the opening devices.

Each primary hole may have a circular, elliptical, rectangular, square, drop shape or at least one slit. This allows the primary hole to be adapted to different types of opening devices. Each primary hole may have at least one slit, particularly a shape formed by more than one slits like perforation, more particularly a single line (-) in different directions, multi lines having a common center point (i.e. star key shape of phone keypad), arc-shape, X, Y, V, C or O shape, all drawn by multi slits like perforation.

The laminated packaging material may further comprise longitudinally distributed secondary holes, each secondary hole being arranged adjacent to, or as an extension of, an associated primary hole. By such secondary holes it is possible to add functionality to the final packaging container, such as allowing the secondary holes to form for example supports for cap holders for tethered caps.

The laminated packaging material may further comprise a plurality of longitudinally distributed reference marks, preferably said reference marks comprises readable information. These reference marks may act as register marks for correct positioning of the primary holes, but they may also form reference or register marks for correct positioning of the opening devices when these are added to the laminated packaging material.

The one or more inside layers may comprise a non-aluminum-foil gas and/or light barrier layer that is not an aluminium foil meaning that the barrier layer is not entirely aluminium as in the prior art.. This further improves the solution described herein, as such barrier layers may be very difficult to penetrate by a user when opening the final packaging container and/or while forming the opening devices by injection molding. The gas that the barrier film avoids to penetrate may be oxygen or other gases that are known as having negative effect on a food product like shortening the storage duration.

In one particular example, the barrier layer may be a fibre based barrier layer (for instance a paper based barrier layer). The fibre based barrier layer has a paper base layer, provided with a coating layer having barrier properties and coated to the paper base layer. The paper base layer may be coated with an aqueous dispersion coating method, with a dispersion or solution of a composition capable of providing barrier to oxygen gas, water vapour and/or further migratory substances. Examples of such compositions are aqueous compositions comprising vinyl alcohol polymers or starch or other polysaccharides, optionally further comprising a filler or a laminar mineral compound, such as talcum or bentonite or other clay minerals. Alternatively, or also, the paper substrate layer may be coated by a vapour deposition method, such as chemical vapor deposition and/or physical vapor deposition and may in a preferred embodiment be metalized, i.e. deposition-coated with a merely nano-meter thick coating of metal, such as aluminium. Depending on its thickness and mechanical properties, such fibre based barrier layers may be difficult to punch, cut or penetrate, thus requiring specific and powerful equipment. However, the converting process allows for such equipment to be installed even if requiring a relatively large installation space and connections.

In one other particular example, the barrier layer may be a polymer based barrier layer. The polymer based barrier layer may comprise a single polymer layer having inherent gas barrier properties; or a layer having a polymer base layer, with a coating layer having barrier properties and coated onto the polymer base layer. The polymer base layer may be pre-manufactured film, having a single or multilayer structure, which is further coated by deposition methods like chemical vapor deposition and/or physical vapor deposition in the same way as described above regarding the fibre based barrier substrate, e.g. such a polymer barrier substrate may be metalized and/or deposition coated with an inorganic oxide, such as with a metal oxide. Such polymer based barrier layers have also been seen to be difficult to punch or penetrate, thus requiring specific and powerful equipment.

These type of fibre based or polymer based barrier layers are seen to be beneficial especially on recycling cycle of the packages formed by the packaging materials as claimed.

Each primary hole may be covered by an opening device, preferably re-sealable, being injection molded directly onto the laminated packaging material.

The laminated packaging material may be provided as a continues web roll comprising a continuous series of consecutive segments, each segment being designed and dimensioned to form a single packaging container and having one of the primary hole. Thus, the packaging material may be easily fed to a food product filling machine as a continues web to be formed into a packaging container.

According to a third aspect a packaging container is provided. The packaging container is formed by the laminated packaging material according to the second aspect.

Still other objectives, features, aspects and advantages of the invention will appear from the following detailed description as well as from the drawings.

### Brief Description of the Drawings

Embodiments of the invention will now be described, by way of example, with reference to the accompanying schematic drawings, in which
Fig. 1 is a schematic view of a filling machine for producing packaging containers from web of laminated packaging material;
Fig. 2a is a schematic view of a process for manufacturing a laminated packaging material according to an embodiment;
Fig. 2b is a schematic view of a process for manufacturing a laminated packaging material according to another embodiments;
Fig. 3 is a cross-sectional view of a laminated packaging material according to an embodiment;
Fig. 4 is a top view of a laminated packaging material according to various embodiments;
Fig. 5 is a partly cross-sectional view of a laminated packaging material according to an embodiment;
Fig. 6 is an isometric view of a packaging container according to an embodiment;
Fig. 7 is a top view of a web of laminated packaging material according to an embodiment; and
Fig. 8 is a schematic view of a method for manufacturing a laminated packaging material according to an embodiment.

### Detailed description

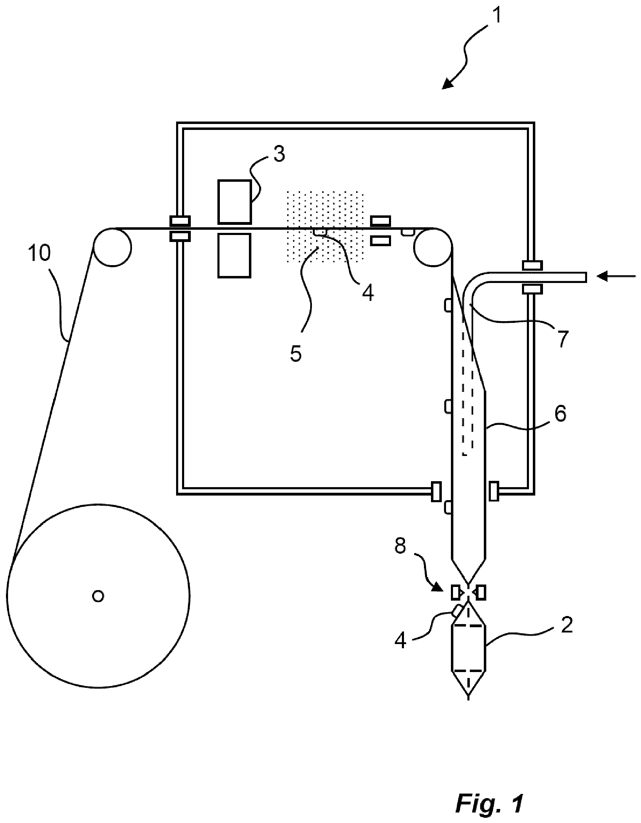

Starting in Fig. 1 an example of a machine 1 for producing packaging containers 2 from a laminated packaging material 10 is shown. The laminated packaging material 10 is provided with longitudinally distributed holes extending through the entire thickness of the laminated packaging material 10. When entering the machine 1, an injection molding station 3 is configured to provide the laminated packaging material 10 with injection molded re-sealable opening devices 4. A sterilization section 5 is arranged downstream the injection molding station 3 and configured to sterilize the laminated packaging material 10 normally being roll-fed into the machine 1. Downstream the sterilization section 5 there is a tube-forming section 6 which seals the longitudinal ends of the laminated packaging material 10 to each other. A filling section 7 is configured to fill the longitudinal tube with the desired content, and a transversal sealing section 8 provides transversal seals and cuts to separate the packaging container 2 from the upstream tube of laminated packaging material 10.

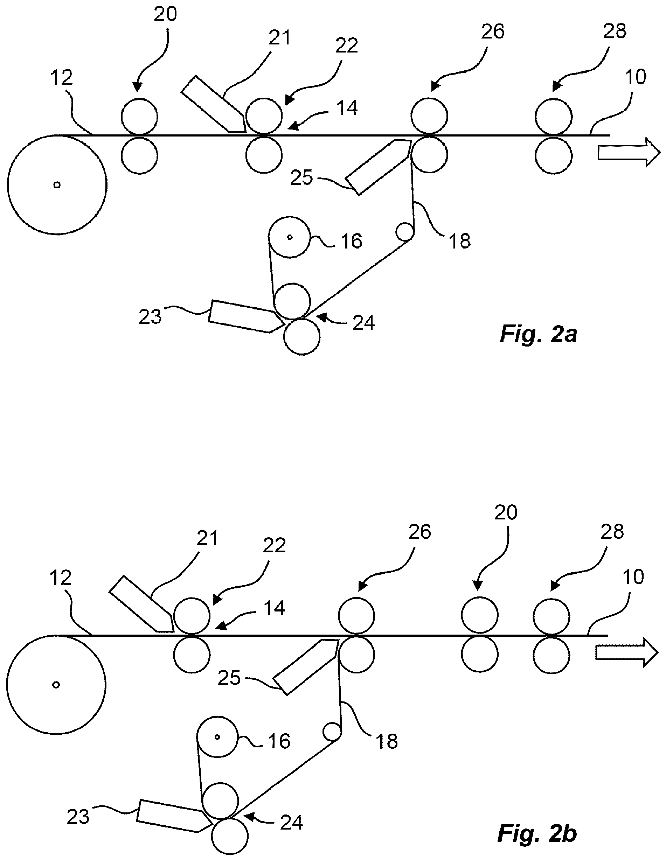

The laminated packaging material 10 can be manufactured according to various processes and equipment, as exemplified in Figs. 2a and 2b.

Starting in Fig. 2a the laminated packaging material 10 is produced from a layer of paper or paperboard or other cellulose-based material, forming a bulk layer 12. Before entering the process shown in Figs. 2a the bulk layer 12 may be provided with a printed décor.

In this embodiment the bulk layer 12 is fed through a creasing nip 20, which creates a plurality of crease lines to the bulk layer 12. The crease lines are designed according to the desired shape of the final packaging container to be formed, and typically these crease lines are formed by a crease roller pressing against the bulk layer 12. The bulk layer 12 is then provided with one or more outside layers 14. This can be achieved by means of an extrusion device 21, followed by a cooling nip 22 to provide an even film onto the bulk layer 12. The outside layer(s) 14 could in other embodiments be provided as a plurality of co-extruded polymer layers arranged onto each other, as well as by other techniques such as wet lamination, dispersion coating, etc.

The inside layer(s) comprises a barrier layer 16, which may be arranged onto a polymer or paper based substrate. The barrier layer 16 is coated on one side with an innermost layer 18 e.g. by means of an extrusion device 23 followed by a cooling nip 24. The barrier film 16 is then laminated to the inside of the bulk layer 12 by means of an additional extrusion device 25 providing a bonding layer 19, followed by a cooling nip 26. As for the outside layer(s), it should be noted that the inside layer(s) 16, 18, 19 could in other embodiments be provided as a plurality of co-extruded polymer layers arranged onto each other, as well as by other techniques such as wet lamination, dispersion coating, etc.

The barrier layer may be an aluminum foil. However, other materials are also possible. Such useful materials include ethylene vinyl-alcohol copolymers (EVOH), polyethylene vinyl-alcohol copolymers (PVOH), nanocrystalline cellulose (NCC) and microfibrillated cellulose (MFC) .

Suitable materials for preventing oxygen and/or water vapor transmission may be applied by vapor deposition coating, such as by physical vapor deposition, PVD, or chemical vapor deposition, CVD, especially plasma enhanced chemical vapor deposition, PECVD. Examples of such vapor deposited barrier coatings in the nanometer thickness range may be metallization coatings, such as metallized aluminum, metal oxide coatings, such as AlOx or SiOx, or coatings of amorphous carbon, i.e. amorphous diamond-like carbon coatings, DLC.

Other suitable materials for preventing oxygen and/or water vapor transmission may be applied by means of aqueous dispersion or solution coating of barrier polymers or barrier compositions of a polymer binder and inorganic particles or fillers.

When the laminated packaging material 10 is formed with the bulk layer 12 and the outside and inside layers 14, 16, 18, 19, the web of laminated packaging material 10 is provided with a plurality of holes. These holes, which may be formed by a punch roller 28, are distributed at least longitudinally so that every packaging container resulting from the web of laminated packaging material 10 will have at least one hole.

The web of laminated packaging material 10 may also be produced as a multi-lane web which is subsequently cut to form separate single lane webs. One lane is used to form a single series of packaging containers, and most filling machines 1 of today operate by receiving such single lane web of laminated packaging material 10. For such multi-lane web embodiment, the holes are also distributed laterally/transversely across the laminated packaging material 10 for the same purpose; so that every packaging container resulting from the web of laminated packaging material 10 will have at least one hole.

In order to ensure proper positioning of the holes, the inventors have realized the importance of determining the desired position of the holes prior to actually forming the holes. These holes are normally aligned with respect to the crease lines which are well-defined and properly oriented on the bulk layer 12. However, during lamination of the outside and inside layers 14, 16, 18, 19 the bulk layer 12 may be subject to shrinking, especially in the lateral direction. It is thus important to monitor the features of the laminated packaging material 10 and to adjust the hole forming apparatus accordingly. This monitoring may be made in-line by means of e.g. cameras or other information readers, while the adjustment may be done by changing the settings of the hole forming means, e.g. by replacing the punch roller with another slightly different punch roller or by allowing the dimensions of the punch roller 28 to be modified, e.g. by shifting the lateral position of the punch features of the punch roller 28. Other parameters that may affect the positioning of the holes is e.g. humidity, temperature, and any change of material of the bulk layer and/or the inside or outside layers.

The embodiment of Fig. 2b is similar to what has been described with reference to Fig. 2a, however the crease forming is in this embodiment made after lamination of the inside and outside layers 14, 16, 18, 19. On an alternative of this embodiment, the functions of the two rollers 20, 28 can be combined and the creasing roller may have punching tools on it. For such setup shrinkage will normally not be a problem, as the crease lines are made after lamination.

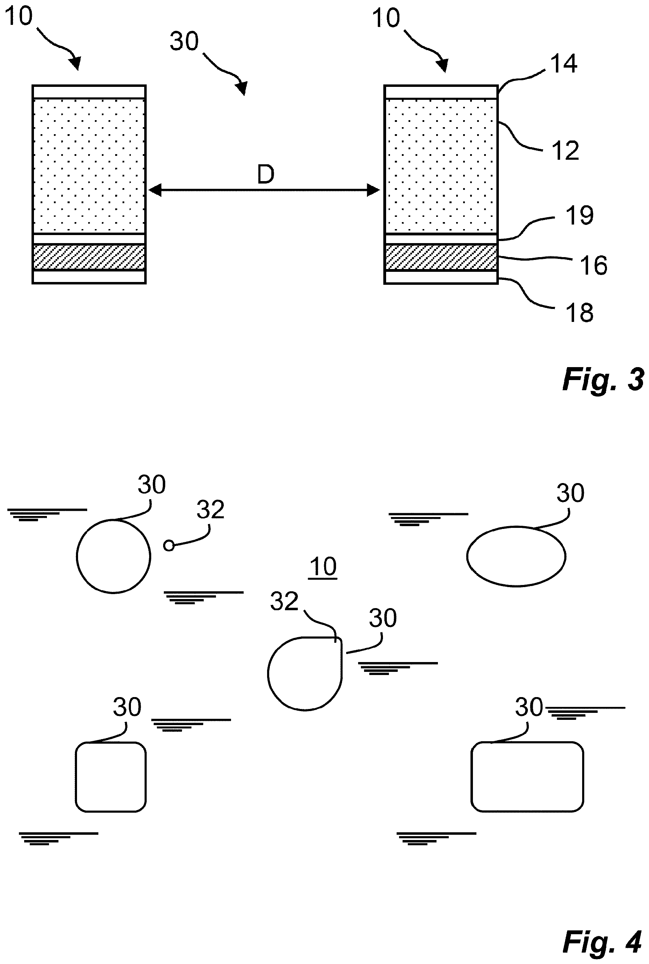

Now turning to Fig. 3, an example of a laminated packaging material 10 is shown in cross-section. The laminated packaging material 10 comprises the bulk layer 10, one or more outside layers 14 arranged to form the outer surface of the final packaging container 2, and one or more inside layers in the form of an innermost polymer layer 18, a barrier layer 16, and a bonding layer 19.

The laminated packaging material 10 is provided with longitudinally distributed holes 30 (only one circular hole 30 is shown in the example) extending entirely through the laminated packaging material 10 and having a substantially constant diameter D.

In Fig. 4 different configurations of the hole 30 are shown. To the upper left the hole 30 is having a circular shape. When being circular, the diameter of the hole 30 may be between 15-50 mm, such as around 30 mm. For other shapes, the dimensions may be selected such that the area of the hole 30 is similar to the area of the circular hole 30 exemplified above or according to the type of the opening device 4 that will be implemented on the laminated packaging material.

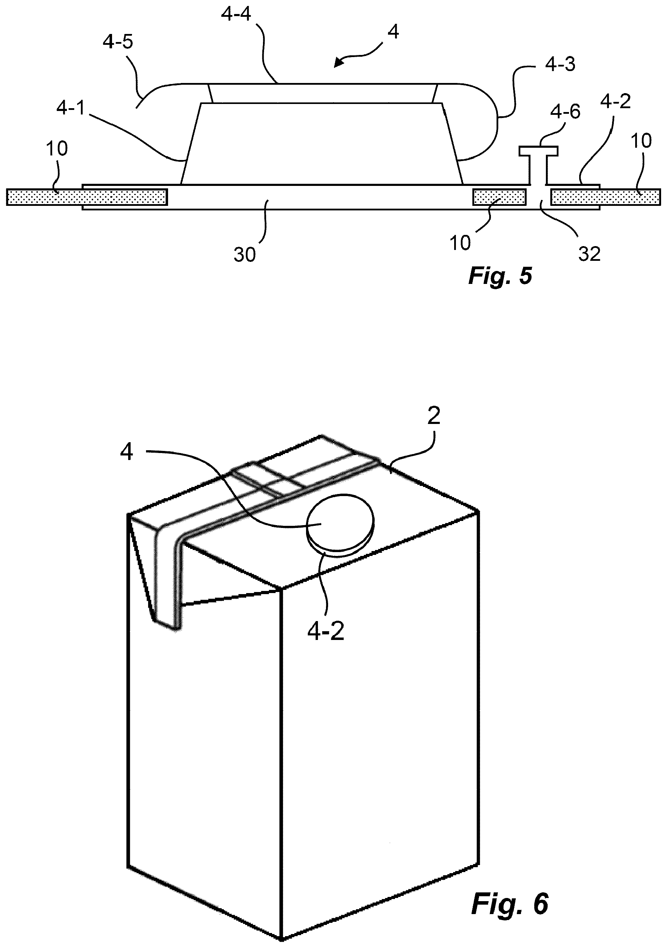

Further, a secondary hole 32 is provided adjacent to the primary hole 30, and being significantly smaller than the primary hole 30. Typically, the diameter of the secondary hole is between 1-5 mm, such as 3 mm. As will be explained with reference to Fig. 5, the secondary hole 32 may assist in injection molding a cap holder for a cap of the opening device 4.

To the upper right in Fig. 4 the hole 30 is having an elliptical shape. Other possible shapes are also shown in Fig. 4, such as a drop shape (center of Fig. 4), a square shape (bottom left in Fig. 4) and rectangular shape (bottom right of Fig. 4). It should be noted that other shapes are also possible, and any shape may be complemented by a secondary hole 32 either arranged adjacent to the primary hole 30, or to some extent merged to the primary hole 30 as in drop shape primary holes 30. As for the primary hole 30, the secondary hole 32 is also extending entirely through the thickness of the laminated packaging material 10 and has a constant dimension or dimensions.

Now turning to Fig. 5 details of a laminated packaging material 10 is shown in cross section. As shown in Fig. 5 the laminated packaging material 10 is provided with a re-sealable opening device 4 that has been injection molded directly onto the laminated packaging material 10.

The laminated packaging material 10 is provided with a primary hole 30 extending entirely through the thickness of the laminated packaging material 10 and having a constant dimension or dimensions, as well as with a secondary hole 32 also extending entirely through the the thickness of laminated packaging material 10 and also having a constant dimension or dimensions, although the dimensions of the secondary hole 32 are much smaller than the primary hole 30.

The re-sealable opening device 4 is preferably injection molded in a single operation and comprises a spout 4-1 which extends upwards from a planar edge 4-2. As can be seen in Fig. 5 the edge 4-2 is surrounding the primary hole 30 and extends on both sides of the laminated packaging material 10 such that the edge of the hole 30 is entirely covered by the edge 4-2 of the spout 4-1. A flexible portion 4-3 is connecting the spout 4-2 with a cap 4-4. Thus, when the cap 4-4 is opened, the cap 4-4 is still in connection with the spout 4-2 and is not separated from the packaging container 2. That helps to process the packaging container 2 together with the cap 4-4 in a recycling process without littering it. The spout 4-2 or the cap 4-4 may be provided with a membrane (not shown); however, here, the cap 4-4 is itself acting like a membrane that can be separated from the spout for the first time by the consumer before the consumption. The cap 4-4 may e.g. be provided with a pull tab 4-5 for allowing a user to easily hold and maneuver the cap 4-4.

The edge 4-2 is also covering the secondary hole 32 which is filled with the injection molded material of the opening device 4. This material forms a support for a cap holder 4-6 that is aligned with the secondary hole 32. The cap holder 4-6 is used to hold the cap 4-4 when opened in order to assist in pouring.

In Fig. 6 an example of a packaging container 2 is shown, having a re-sealable opening device 4. The packaging container 2 is in this example entirely formed by the laminated packaging material 10 being folded and sealed to obtain the desired parallelepiped shape. The upper part of the packaging container 2 is provided with the opening device 4 which has been injection molded over a hole 30, and optionally over a secondary hole 32. The edge 4-2 of the opening device 4 will ensure that the laminated packaging material 10, at the edge of the holes 30, 32, is entirely covered and protected from the product enclosed by the packaging container 2, as well as from the outer environment.

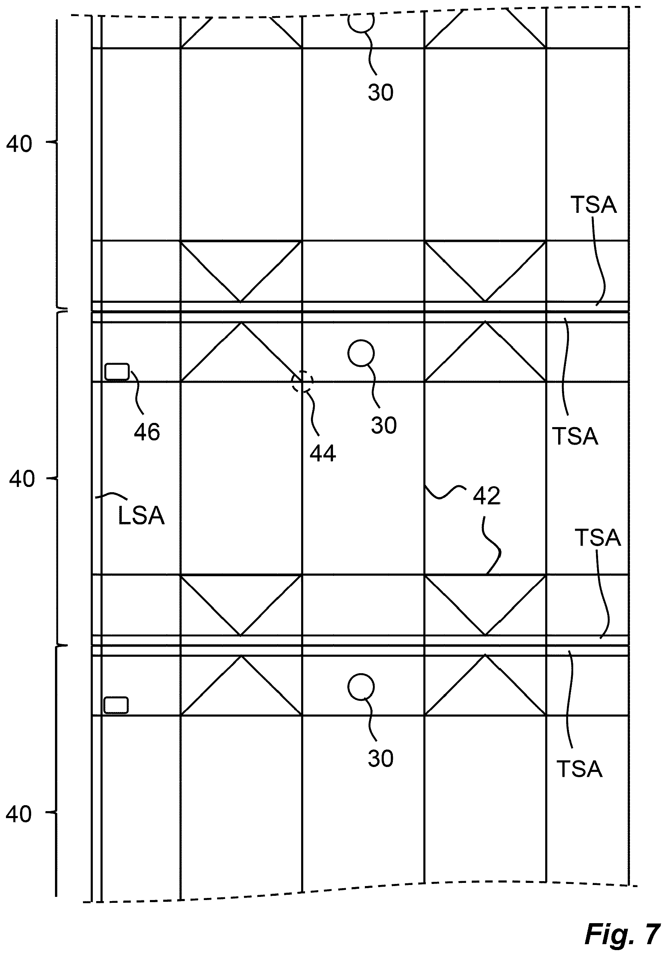

Again referring to Fig. 1, the laminated packaging material 10 may enter the filling machine 1 (i.e. the machine configured to form, fill, and seal individual packages) in the form of a continuous web loaded on a reel. Such web of laminated packaging material 10 is schematically shown in Fig. 7. The laminated packaging material 10 comprises a continuous series of consecutive segments 40, each segment 40 being designed and dimensioned to form a single packaging container 2 after being folded, formed, and sealed into a package 2.

Certain transversal seal areas TSA of the laminated packaging material 10 will be part of transversal seals formed when producing the final packaging container 2, and they extend across the entire width of the laminated packaging material 10. The longitudinal sealing areas LSA which will form the longitudinal sealing once the packaging container 2 is manufactured extend on one lateral edge of the laminated packaging material 10. Each segment 40 is provided with crease lines 42 indicating where to fold the laminated packaging material 10 in order to form a package 2.

Each segment 40 is further provided with a hole 30, and optionally also a secondary hole 32. In Fig. 7 the position of the hole 32 corresponds to the position of the opening device 4 shown in Fig. 6, however different positions are also possible. For correct positioning of the opening device 4 it is important to provide the hole 30 at the desired position, especially with regards to where the crease lines 42 are arranged.

As explained above, if the crease lines 42 are provided prior to lamination of the outside and inside layers 14, 16, 18, 19 the bulk layer 12 may shrink during lamination, which will cause the crease lines 42 to be positioned slightly differently from their initial position before lamination.

To ensure the correct position of the holes 30 it is possible to make use of reference positions on the laminated packaging material 10. Such reference position may be a specific reference feature of the crease lines 40 as a reference mark 44, e.g. a corner where two or more crease lines intersect. Another option is to make use of separate reference marks 46; such marks 46 may be applied, preferably printed onto the laminated packaging material prior to lamination, preferably on the bulk layer, and they may comprise information data. For example, the reference marks 46 may be provided as printed spots which are made by magnetizable ink comprising magnetizable particles, a solvent and a binder. They may be magnetized preferably while creasing the packaging material. Such technique is described in EP2435321 by the same applicant, and will not be described further herein.

The use of reference marks 44, 46 is advantageous both when punching the holes 30 and when injection molding the opening devices 4. The laminated packaging material 10 will define a coordinate system having a longitudinal axis and a transversal axis. By knowing the desired position of the hole 30 with regards to a reference mark 44, 46 it is possible to adjust the punching operation to provide the hole 30 at the desired position.

Further, it is also possible to make use of the reference marks 44, 46 when injection molding the opening device 4 to the laminated packaging material. If it is determined that the actual position of the holes 30 deviates slightly from the machine pre-set position, adjustments can be made to ensure that the position of subsequent holes 30 is corrected. The same applies for the position of the opening device 4.

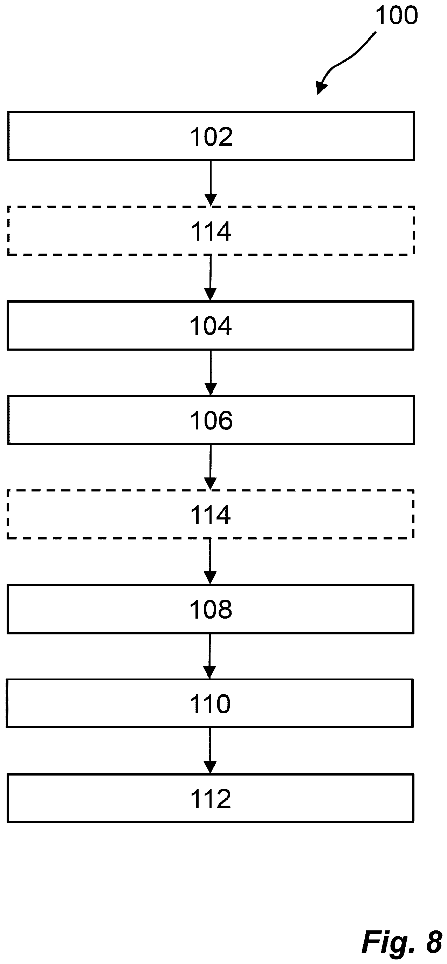

Now turning to Fig. 8, a method 100 for manufacturing a laminated packaging material 10 is schematically shown. The method 100 comprises a step 102 of providing a bulk layer 12 of paper or paperboard or other cellulose-based material, a step 104 of laminating one or more outside layers 14 to the bulk layer 12, said outside layers 14 intended to face the exterior of a packaging container 2 formed by the packaging material 10, and a step 106 of laminating one or more inside layers 16, 18, 19 to the bulk layer 12, the inside layers 16, 18, 19 intended to face the interior of a packaging container 2 formed by the packaging material 10. The method further comprises a step 108 of determining desired positions of a plurality of longitudinally distributed holes 30, 32, and a step 110 of providing a plurality of longitudinally distributed holes 30, 32 at the desired positions, each hole 30, 32 extending through the entire laminated packaging material 10.

The method 100 may further comprise a step 112 of providing the laminated packaging material 10 with re-sealable opening devices 4, each opening device 4 covering one hole 30, 32. The step 112 may be performed by injection molding directly onto the laminated packaging material 10.

The method 100 may further comprise a step 114 of providing a plurality of crease lines 42 to the laminated packaging material 10. Step 114 may either be performed prior to the steps 104, 106, or after the steps 104, 106. Preferably, step 108 is performed by determining the desired positions of the plurality of longitudinally distributed holes 30, 32 based on the positions of the crease lines 42 or based on the positions of reference marks 46 provided on the bulk layer 12.

The steps 114 and 110 may be performed also at the same time, preferably at the same tool. Thus, the step 108 may be performed at the same time together with the steps 114 and 110.

The method and the laminated packaging material explained before are complementary to each other. Any product/feature of any step of the method can be assumed as the feature of the laminated packaging material, although it is explicitly not mentioned as the feature of the laminated packaging material. Any method step, explicitly or implicitly mentioned as the way to produce any feature of the laminated packaging material can be assumed as the step of the method, although it is explicitly not mentioned as the step of the method.

From the description above follows that, although various embodiments of the invention have been described and shown, the invention is not restricted thereto, but may also be embodied in other ways within the scope of the subject-matter defined in the following claims.

### LIST OF REFERENCES

- 1.: Machine for producing packaging containers
- 2.: Packaging container
- 3.: Injection molding station
- 4.: Re-sealable opening device
- 4-1.: Spout
- 4-2.: Spout edge
- 4-3.: Flexible portion of spout
- 4-4.: Cap
- 4-5.: Pull tab
- 4-6.: Cap holder
- 5.: Sterilization station
- 6.: Tube-forming section
- 7.: Filling section
- 8.: Transversal sealing section
- 10.: Laminated packaging material
- 12.: Bulk layer
- 14.: Outside layers
- 16.: Barrier layer
- 18.: Innermost layer
- 19.: Bonding layer
- 20.: Creasing nip
- 21.: Extrusion device
- 22.: Cooling nip
- 23.: Extrusion device
- 24.: Cooling nip
- 25.: Extrusion device
- 26.: Cooling nip
- 28.: Punch roller
- 30.: Hole
- 32.: Secondary hole
- 40.: Segment of laminated packaging material
- 42.: Crease lines
- 44.: Reference crease line feature
- 46.: Reference mark
- 100.: Method
- 102.: Method step
- 104.: Method step
- 106.: Method step
- 108.: Method step
- 110.: Method step
- 112.: Method step
- 114.: Method step
- D.: Hole diameter
- LSA.: Longitudinal sealing area
- TSA.: Transversal sealing area

## Claims

1. A method for producing a laminated packaging material (10), comprising:
- providing a bulk layer (12) of paper or paperboard or other cellulose-based material;
- laminating one or more outside layers (14) to the bulk layer (12), said outside layers (14) intended to face the exterior of a packaging container (2) formed by the packaging material (10),
- laminating one or more inside layers (16, 18, 19) to the bulk layer (12), said inside layers (16, 18, 19) intended to face the interior of a packaging container (2) form by the packaging material (10),
- determining desired positions of a plurality of longitudinally distributed holes (30), and
- providing a plurality of longitudinally distributed holes (30) at the desired positions, each hole (30) extending through the entire thickness of the laminated packaging material (10).

2. The method according to claim 1, further comprising providing the laminated packaging material (10) with opening devices (4), each opening device (4) covering one hole (30).

3. The method according to claim 2, wherein each opening device (4) is provided by injection molding directly onto the laminated packaging material (10).

4. The method according to any of the preceding claims, further comprising providing a plurality of crease lines (42) and/or reference marks (46) to the bulk layer (12) prior to laminating one or more inside layers (16, 18, 19) and/or outside layers (14) to the bulk layer (12), and wherein the desired positions of the plurality of longitudinally distributed holes (30) are determined based on the positions of the crease lines (42) and/or the positions of reference marks (46) provided.

5. The method according to claim 4, wherein determining desired position of the plurality of longitudinally distributed holes (30) further comprises determining shrinkage of the bulk layer (12) during lamination of the one or more inside layers (16, 18, 19) and/or outside layers (14), and correcting the desired positions based on the determined shrinkage.

6. The method according to any of claims 1 to 3, further comprising providing a plurality of crease lines (42) and/or reference marks (46) to the laminated packaging material (10) after laminating one or more inside layers (16, 18, 19) and/or outside layers (14) to the bulk layer (12), and wherein the desired positions of the plurality of longitudinally distributed holes (30) are determined based on the positions of the crease lines (42) and/or the positions of reference marks (46) provided.

7. The method according to any of the preceding claims, wherein the holes (30) are distributed both longitudinally and transversally across the laminated packaging material (10), and wherein the method further comprises cutting the laminated packaging material (10) in the longitudinal direction to form separate webs of laminated packaging material (10), each separate web of laminated packaging material (10) comprising holes (30) only distributed longitudinally.

8. A laminated packaging material (10), comprising a bulk layer (12) of paper or paperboard or other cellulose-based material, one or more outside layers (14) being laminated to the bulk layer (12), one or more inside layers (16, 18, 19) being laminated to the bulk layer (12), and a plurality of longitudinally distributed primary holes (30) extending through the entire thickness of the laminated packaging material (10) .

9. The laminated packaging material according to claim 8, wherein each primary hole (30) has a circular, elliptical, rectangular, square, drop shape or at least one slit.

10. The laminated packaging material according to claim 8 or 9, further comprising longitudinally distributed secondary holes (32), each secondary hole (32) being arranged adjacent to, or as an extension of, an associated primary hole (30).

11. The laminated packaging material according to any of claims 8 to 10, further comprising a plurality of longitudinally distributed reference marks (44, 46), preferably said reference marks (46) comprises readable information.

12. The laminated packaging material according to any of claims 8 to 11, wherein said one or more inside layers (16, 18, 19) comprises a non-aluminum-foil gas and/or light barrier layer (16).

13. The laminated packaging material according to any of claims 8 to 12, wherein each primary hole (30) is covered by an opening device (4), preferably re-sealable, being injection molded directly onto the laminated packaging material (10).

14. The laminated packaging material according to any of claims 8 to 13, wherein it is provided as a continues web roll comprising a continuous series of consecutive segments (40), each segment (40) being designed and dimensioned to form a single packaging container (2) and each segment (40) having one of the primary hole (30).

15. A packaging container (2) formed by the laminated packaging material according to any of claims 8 to 14.
